# EUROPEAN PATENT SPECIFICATION

(11) **EP 3 395 938 B1**
(45) Date of publication and mention of the grant of the patent: **13.07.2022**
(21) Application number: 16878328.0
(22) Date of filing: 05.12.2016
(51) Int. Cl.: G01N 15/10, G01N 15/14, G01N 21/27, G01N 21/64

(54) **METHOD FOR CALIBRATING BIOLOGICAL PARTICLE COUNTER AND DEVICE FOR CALIBRATING BIOLOGICAL PARTICLE COUNTER**
VERFAHREN ZUR KALIBRIERUNG EINES BIOLOGISCHEN PARTIKELZÄHLERS UND VORRICHTUNG ZUR KALIBRIERUNG EINES BIOLOGISCHEN PARTIKELZÄHLERS
PROCÉDÉ D'ÉTALONNAGE D'UN COMPTEUR DE PARTICULES BIOLOGIQUES ET DISPOSITIF D'ÉTALONNAGE D'UN COMPTEUR DE PARTICULES BIOLOGIQUES

(30) Priority: 25.12.2015 JP 2015252703
(43) Date of publication of application: 31.10.2018
(73) Proprietor: RION Co., Ltd., Kokubunji-shi Tokyo 185-8533 (JP)
(72) Inventor: SEKIMOTO, Kazuma, Kokubunji-shi Tokyo 185-8533 (JP); OOHASHI, Yuki, Kokubunji-shi Tokyo 185-8533 (JP); SANNOMIYA, Takashi, Kokubunji-shi Tokyo 185-8533 (JP); NAKAJIMA, Tsutomu, Kokubunji-shi Tokyo 185-8533 (JP); FUKUDA, Miyuki, Tokyo 105-8640 (JP); UENO, Masaru, Tokyo 105-8640 (JP); UEYA, Yuuichi, Tokyo 105-8640 (JP)
(74) Representative: Dennemeyer & Associates S.A.
(86) International application number: PCT/JP2016/086050
(87) International publication number: WO 2017/110435

(56) References cited:
- WO-A1-2009/042423
- JP-A- H09 274 035
- JP-A- 2007 047 154
- JP-A- 2007 508 526
- JP-A- 2013 146 263
- JP-A- 2013 158 272
- JP-A- 2014 054 232
- Anonymous: "Rainbow Bead Standardization Why Standardize My Flow Assay? How Does Rainbow Bead Standardization Work?", , 6 October 2015 (2015-10-06), XP055602749, Retrieved from the Internet: URL:https://cancer.wisc.edu/research/wp-co ntent/uploads/2017/03/Flow_TechNotes_Rainb ow-Standard-Tech-Note_20170918.pdf [retrieved on 2019-07-05]
- Anonymous: "The NovoCyte Analyzer Review - Acea Biosciences", , 25 September 2015 (2015-09-25), XP055603064, Retrieved from the Internet: URL:http://ucflow.blogspot.com/2015/09/the -novocyte-analyzer-review-acea.html [retrieved on 2019-07-08]
- JOERG MARTINI ET AL: "Time encoded multicolor fluorescence detection in a microfluidic flow cytometer", LAB ON A CHIP, vol. 12, no. 23, 1 January 2012 (2012-01-01), page 5057, XP055128250, ISSN: 1473-0197, DOI: 10.1039/c2lc40515f
- SAMUEL A. STONER ET AL: "High sensitivity flow cytometry of membrane vesicles : Vesicle Flow Cytometry", NIH PUBLIC ACCESS AUTHOR MANUSCRIPT, vol. 89, no. 2, 20 October 2015 (2015-10-20), pages 196-206, XP055603278, ISSN: 1552-4922, DOI: 10.1002/cyto.a.22787
- Anonymous: "Obtain the highest-quality data your system can deliver Fluorescent microspheres for calibrating microscopes and flow cytometers.", , 1 January 2014 (2014-01-01), pages 28-30, XP055603289, Retrieved from the Internet: URL:https://www.thermofisher.com/content/d am/LifeTech/global/technical-reference-lib rary/newsletters-journals/bioprobes/pdfs/b p70/bp70-fluorescent-microspheres-flr.pdf [retrieved on 2019-07-08]
- W. L. CHANDLER ET AL: "A new microparticle size calibration standard for use in measuring smaller microparticles using a new flow cytometer", JOURNAL OF THROMBOSIS AND HAEMOSTASIS, vol. 9, no. 6, 1 June 2011 (2011-06-01), pages 1216-1224, XP055336821, GB ISSN: 1538-7933, DOI: 10.1111/j.1538-7836.2011.04283.x
- Stephen De Rosa: "Flow cytometer instrument set up", , 4 May 2015 (2015-05-04), XP055602745, Retrieved from the Internet: URL:https://depts.washington.edu/cfar/site s/default/files/uploads/DeRosa-instrument% 20set%20up-150427.pdf [retrieved on 2019-07-05]
- T KALINA ET AL: "EuroFlow standardization of flow cytometer instrument settings and immunophenotyping protocols", LEUKEMIA, vol. 26, no. 9, 1 September 2012 (2012-09-01), pages 1986-2010, XP055602761, London ISSN: 0887-6924, DOI: 10.1038/leu.2012.122
- Anonymous: "Rainbow Calibration Particles", , 1 January 2011 (2011-01-01), XP055603333, Retrieved from the Internet: URL:https://www.bdbiosciences.com/document s/BD_Accuri_SPHERO_RainbowCalibration_Part icles_ProdInfoSheet.pdf [retrieved on 2019-07-08]

## Description

### TECHNICAL FIELD

The present invention relates to a method for calibrating a biological particle counter and a calibration device of the biological particle counter.

### BACKGROUND ART

In a certain biological particle counter, liquid containing biological particles flows into a flow cell, and a predetermined measurement area in the flow cell is irradiated with laser light. Further, scattered light and autofluorescence from the biological particles having passed through the measurement area are received. Then, based on a detection signal of the scattered light and a detection signal of the fluorescence, the biological particles are counted while being separated from non-biological particles. Meanwhile, the particle size of each biological particle having passed through the measurement area is measured based on the detection signal of the scattered light. At the same time, the fluorescence intensity of each biological particle having passed through the measurement area is measured based on the detection signal of the fluorescence (see, e.g., Patent Document 1).

On the other hand, in the method for calibrating a certain microorganism detection device, a polystyrene particle is used as a calibration particle. According to the calibration method of this device, autofluorescence of the polystyrene particles irradiated with laser light is detected. Further, the microorganism detection device is calibrated based on the intensity of the fluorescence (see, e.g., Patent Document 2). Further, an article in UWCCC Flow Lab ("Rainbow Bead Standardization": Non-Patent Document 1) discloses a method for calibrating a biological particle counter. The method uses Rainbow beads for calibrating the instrument whereby the beads are acquired and the voltages are adjusted until the bead peaks hit the target values. This is done for each instrument channel. Rainbow beads are hard-dyed fluorescent polystyrene particles which are impregnated with a mixture of dyes

### CITATION LIST

### PATENT DOCUMENT

PATENT DOCUMENT 1: JP-A-2013-117466
PATENT DOCUMENT 2: JP-A-2013-146263
NON-PATENT DOCUMENT 1: UWCCC FLOW CYTOMETRY LABORATORY, 06 OCT 2015

### SUMMARY OF THE INVENTION

### PROBLEMS TO BE SOLVED BY THE INVENTION

However, the biological particle counter can detect various biological particles. Thus, for counting the biological particles targeted for counting with high accuracy, the calibration particle with a particle size and fluorescence characteristics close to the particle size and fluorescence characteristics (a fluorescence wavelength, fluorescence intensity, and the like) of the biological particle targeted for counting is preferably used to calibrate the biological particle counter according to the biological particle targeted for counting.

In the above-described calibration method, the intensity of the fluorescence obtained from the polystyrene particle is changeable due to a change in the particle size of the polystyrene particle. Thus, for obtaining sufficient fluorescence intensity by the above-described polystyrene particle, a polystyrene particle with a large particle size needs to be used. For this reason, in counting of biological particles (specifically, biological particles with a small particle size and relatively-high fluorescence intensity) with a small particle size, the intensity of the scattered light received by the biological particle counter needs, in addition to calibration of the fluorescence intensity, to be calibrated using polystyrene particles corresponding to such a small particle size.

Moreover, it is assumed that the fluorescence intensity is increased according to the biological particles targeted for counting by the calibration particles formed by mixing a fluorescence agent with a base material. However, the intensity of the fluorescence from the calibration particle is easily changeable according to the status of mixing the base material and the fluorescence agent. For this reason, it is difficult to manufacture the calibration particles while controlling the amount of fluorescence agent such that the fluorescence intensity becomes constant at an intended value. Moreover, it has been found that when the biological particles and the particles containing the fluorescence agent emit the fluorescence, the scattered light emitted from those particles decrease.

The present invention has been made in view of the above-mentioned problems. An object of the present invention is to provide the method and device for calibrating a biological particle counter, the method and device being configured in order that the biological particle counter can be calibrated according to biological particles targeted for counting.

### SOLUTIONS TO THE PROBLEMS

A method for calibrating a biological particle counter according to the present invention includes a first measurement step of generating a first signal for a calibration particle by the biological particle counter including a first circuit and configured to count a biological particle based on the first signal, the first circuit being configured to generate the first signal corresponding to fluorescence from the biological particle in response to irradiated light, and a first adjustment step of adjusting the first circuit such that a voltage value of the first signal for the calibration particle reaches a reference voltage value. The calibration particle is a particle obtained in such a manner that a fluorescence agent infiltrates into a surface of a polystyrene particle, and at the first adjustment step, (a) reference data indicating a correspondence relation between a fluorescence agent parameter value correlated to a content of the fluorescence agent inside the surface of the polystyrene particle and the reference voltage value of the first signal corresponding to the fluorescence agent parameter value is used to specify the reference voltage value of the first signal corresponding to the fluorescence agent parameter value for the calibration particle used at the measurement step, (b) the first circuit is adjusted such that the voltage value of the first signal for the calibration particle reaches the reference voltage value specified based on the reference data, (c) reference data indicating a correspondence relation between the fluorescence agent parameter value and the reference voltage value of the second signal corresponding to the fluorescence agent parameter value is used to specify the reference voltage value of the second signal corresponding to the fluorescence agent parameter value for the calibration particle used at the measurement step, and (d) the second circuit is adjusted such that the voltage value of the second signal for the calibration particle reaches the reference voltage value of the second signal in the reference data. The biological particle counter counts the biological particles or the calibration particles in sample liquid.

A calibration device of a biological particle counter according to the present invention includes a measurement value obtainer configured to obtain a voltage value of a first signal and a second signal for a calibration particle from the biological particle counter including a first circuit and a second circuit, configured to count a biological particle based on the first signal and the second signal, the first circuit being configured to generate the first signal corresponding to fluorescence from the biological particle in response to irradiated light and the second circuit being configured to generate the second signal corresponding to the scattered light from the biological particle in response to the irradiated light, and a circuit adjuster configured to adjust the first circuit and the second circuit such that the voltage value of the first signal and the second signal obtained for the calibration particle reaches a reference voltage value. The calibration particle is a particle obtained in such a manner that a fluorescence agent infiltrates into a surface of a polystyrene particle, and the circuit adjuster (a) uses reference data indicating a correspondence relation between a fluorescence agent parameter value correlated to a content of the fluorescence agent inside the surface of the polystyrene particle and the reference voltage value of the first signal corresponding to the fluorescence agent parameter value, thereby specifying the reference voltage value of the first signal corresponding to the fluorescence agent parameter value for the calibration particle for which the voltage value of the first signal has been obtained by the measurement value obtainer, (b) adjusts the first circuit such that the voltage value of the first signal for the calibration particle reaches the reference voltage value specified based on the reference data, (c) uses reference data indicating a correspondence relation between a fluorescence agent parameter value correlated to the content of the fluorescence agent inside the surface of the polystyrene particle and the reference voltage value of the second signal corresponding to the fluorescence agent parameter value, thereby specifying the reference voltage value of the second signal corresponding to the fluorescence agent parameter value for the calibration particle for which the voltage value of the second signal has been obtained by the measurement value obtainer; and (d) adjusts the second circuit such that the voltage value of the second signal for the calibration particle reaches the reference voltage value specified based on the reference data. The biological particle counter counts the biological particles or the calibration particles in sample liquid.

### ADVANTAGEOUS EFFECTS OF THE INVENTION

According to the present invention, the biological particle counter can be calibrated according to the biological particles targeted for counting.

### BRIEF DESCRIPTION OF THE DRAWINGS

Fig. 1 is a block diagram of a structure of a calibration device of a biological particle counter according to an embodiment of the present invention.
Fig. 2(A) is a graph of an example of a correspondence relation, in reference data 31 of Fig. 1, between a fluorescence agent parameter value (in this example, an introduced amount) and a reference voltage value (in this example, a pulse height value) of a first signal corresponding to the fluorescence agent parameter value.
Fig. 2(B) is a graph of an example of a correspondence relation between the fluorescence agent parameter value (in this example, the introduced amount) and a reference voltage value (in this example, a pulse height value) of a second signal corresponding to the fluorescence agent parameter value.
Fig. 3 is a flowchart for describing operation of the calibration device 2 illustrated in Fig. 1.

### DESCRIPTION OF EMBODIMENTS

Hereinafter, an embodiment of the present invention will be described with reference to the drawings.

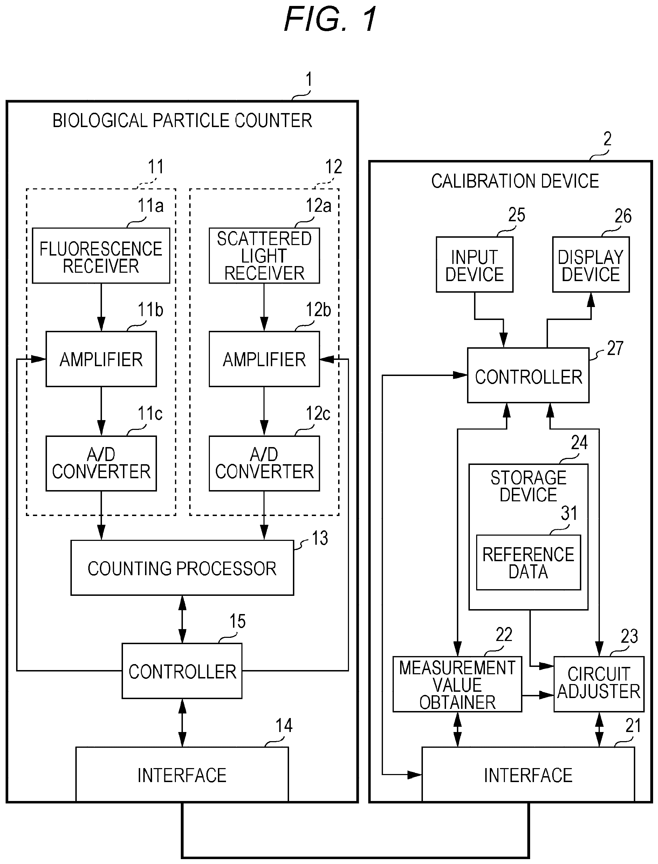

Fig. 1 is a block diagram of a structure of a calibration device of a biological particle counter according to the embodiment of the present invention. Calibration of the biological particle counter 1 illustrated in Fig. 1 is automatically performed by the calibration device 2 according to the method for calibrating the biological particle counter concerning to the embodiment of the present invention.

As in, e.g., the above-described device of JP-A-2013-117466, the biological particle counter 1 includes a flow cell (not shown) configured such that sample liquid containing biological particles or calibration particles flows in the flow cell, a light source and an optical system (not shown) configured to irradiate a predetermined measurement area in the flow cell with laser light, and an optical system (not shown) configured to separate fluorescence and scattered light emitted from the particles (the biological particles or the calibration particles) in the measurement area in response to the irradiated light.

Further, the biological particle counter 1 includes a first circuit 11 configured to generate a first signal corresponding to the fluorescence from the biological particles or the calibration particles in response to the irradiated light, a second circuit 12 configured to generate a second signal corresponding to the scattered light from the biological particles or the calibration particles in response to the irradiated light, and a counting processor 13 configured to count the biological particles based on the first signal and the second signal.

The first circuit 11 includes a fluorescence receiver 11a such as a photodiode, an amplifier 11b, and an A/D converter 11c. The fluorescence receiver 11a is configured to receive the fluorescence from the above-described biological particles, thereby outputting an electric signal of voltage corresponding to the intensity of the received fluorescence. The amplifier 11b is configured to amplify the voltage of the electric signal with a predetermined amplification factor. The A/D converter 11c is configured to convert the amplified electric signal into a digital signal.

The second circuit 12 includes a scattered light receiver 12a such as a photodiode, an amplifier 12b, and an A/D converter 12c. The scattered light receiver 12a is configured to receive the scattered light from the above-described biological particles, thereby outputting an electric signal of voltage corresponding to the intensity of the received scattered light. The amplifier 12b is configured to amplify the voltage of the electric signal with a predetermined amplification factor. The A/D converter 12c is configured to convert the amplified electric signal into a digital signal.

The counting processor 13 is a digital processing circuit configured to count, for each particle size classification, the biological particles passing through the measurement area based on the digital signal output from the first circuit 11 and the digital signal output from the second circuit 12. Note that a threshold for the particle size classification is set based on the scattered light intensity corresponding to the particle size of a polystyrene particle (the content of a fluorescence agent is zero) as a standard particle.

When passing through the above-described measurement area, the biological particles or the calibration particles emit the fluorescence and the scattered light corresponding to the irradiated laser light. Note that when non-biological particles without fluorescence characteristics pass through the measurement area, the scattered light is emitted, but no fluorescence is emitted. Thus, the counting processor 13 detects the pulse-shaped first and second signals for each of the biological particles or the calibration particles passing through the above-described measurement area. Further, the counting processor 13 measures the number of biological particles based on the number of pulse-shaped first and second signals. At this point, in a case where the pulse height values of the pulse-shaped first and second signals each exceed predetermined thresholds, the number of biological particles is counted.

That is, in a case where the pulse-shaped first and second signals are observed at the same timing, the counting processor 13 takes such a state as the biological particles being observed, and performs counting. On the other hand, in a case where the first signal is not observed at the timing where the second signal is observed, the counting processor 13 takes such a state as the non-biological particles being observed, and does not count the biological particles. Moreover, the particle size of the biological particle is measured based on the pulse height value of the second signal, and the fluorescence intensity of the biological particle is measured based on the pulse height value of the first signal. Thus, the biological particle counter 1 can observe not only the number of biological particles, but also the particle size and the fluorescence intensity (and distribution thereof).

Further, the biological particle counter 1 includes an interface 14 and a controller 15. The interface 14 is configured to perform data communication with an external device such as the calibration device 2 via wired or wireless connection. For example, output of a measurement result from the biological particle counter 1 and input of various kinds of commands to the biological particle counter 1 are performed via the interface 14.

The controller 15 is configured to control internal devices (the first circuit 11, the second circuit 12, the counting processor 13, the interface 14, and the like) of the biological particle counter 1, thereby controlling operation of the biological particle counter 1, such as initiation of measurement, termination of measurement, output of the measurement result, and adjustment of the first circuit 11 and the second circuit.

On the other hand, the calibration device 2 includes an interface 21, a measurement value obtainer 22, a circuit adjuster 23, a storage device 24, an input device 25, and a display device 26.

The interface 21 is a communication device configured to perform data communication with the interface 14 of the biological particle counter 1 with or without wires. For example, obtaining of the measurement result from the biological particle counter 1 and supply of a calibration command to the biological particle counter 1 are performed via the interface 21.

The measurement value obtainer 22 is configured to obtain, from the biological particle counter 1, the voltage value (in this embodiment, the pulse height value) of the first signal and the voltage value (in this embodiment, the pulse height value) of the second signal for the calibration particle.

Note that the measurement value obtainer 22 may obtain, from the biological particle counter 1, the voltage value of the first signal and the voltage value of the second signal for the calibration particle, these voltage values being measured and saved in advance by the biological particle counter 1. Alternatively, the measurement value obtainer 22 may cause the biological particle counter 1 to perform measurement, and may further obtain, from the biological particle counter 1, the voltage value of the first signal and the voltage value of the second signal for the measured calibration particle.

The calibration particle is a non-biological particle having a particle size and fluorescence characteristics simulating the particle size and fluorescence characteristics of the biological particle targeted for measurement. In this embodiment, particles obtained by infiltration of the fluorescence agent into surfaces of base material particles are used as the calibration particles. For example, base material particles obtained in such a manner that a solution containing the fluorescence agent infiltrates from the outside of surfaces to the inside thereof and the fluorescence agent is thus fixed inside the surfaces are used as the calibration particles. Since the fluorescence agent infiltrates into the surfaces of the base material particles, the particle size of the calibration particle is the same as that of the base material particle in the case of using the same base material particles. Further, the particle size of the calibration particle is constant regardless of the content of the fluorescence agent. In addition, the calibration particle can have a small particle size falling within a range of 0.3 µm to 1.0 µm.

For example, a polystyrene particle as the standard particle is used as the base material particle of the calibration particle, and porphyrin or a porphyrin derivative is used as the fluorescence agent. For example, in a case where biological particles containing chlorophyll a, such as algae, are targeted for measurement, a porphyrin derivative having fluorescence characteristics close to chlorophyll a (i.e., close to a fluorescence wavelength for irradiated light with a predetermined wavelength) is used as the fluorescence agent. Note that the fluorescence agent is not limited to porphyrin. Another material may be used as the fluorescence agent according to biological particles targeted for measurement.

Upon calibration of the biological particle counter 1, sample liquid containing the calibration particles flows into the flow cell of the biological particle counter 1, and then, measurement is performed.

The circuit adjuster 23 is configured to read reference data 31 from the storage device 24. The circuit adjuster 23 is configured to adjust, based on the reference data 31, each of the first and second circuits 11, 12 of the biological particle counter 1 such that the voltage value of the first signal and the voltage value of the second signal for the calibration particle obtained by the measurement value obtainer 22 each reach reference voltage values.

Specifically, the circuit adjuster 23 (a) uses the reference data 31 to specify the reference voltage value of the first signal corresponding to a fluorescence agent parameter value for the calibration particle used for current calibration (i.e., the calibration particle for which the voltage value of the first signal has been obtained by the measurement value obtainer 22), and (b) adjusts the first circuit 11 such that the voltage value of the first signal for the calibration particle reaches the reference voltage value specified based on the reference data 31. Moreover, the circuit adjuster 23 (c) uses the reference data 31 to specify the reference voltage value of the second signal corresponding to the fluorescence agent parameter value for the calibration particle used for current calibration (i.e., the calibration particle for which the voltage value of the second signal has been obtained by the measurement value obtainer 22), and (d) adjusts the second circuit 12 such that the voltage value of the second signal for the calibration particle reaches the reference voltage value specified based on the reference data 31.

In this embodiment, the circuit adjuster 23 derives, in calibration of the fluorescence intensity, a correction coefficient of the amplification factor of the amplifier 11b for adjusting the voltage value of the first signal for the calibration particle to the reference voltage value. The circuit adjuster 23 outputs the derived correction coefficient to the biological particle counter 1 via the interface 21. In this manner, the circuit adjuster 23 adjusts the first circuit 11 of the biological particle counter 1. That is, the correction coefficient is received by the controller 15 of the biological particle counter 1 via the interfaces 14, 21. Further, the amplification factor of the amplifier 11b is set based on the correction coefficient. Specifically, the amplification factor is set to the product of the correction coefficient and a current amplification factor.

For example, in a case where the voltage value (e.g., the pulse height value) of the first signal obtained for the calibration particle is V1 and the reference voltage value of the first signal specified based on the particle size value and fluorescence agent parameter value of the calibration particle is V1r, the correction coefficient C1 is V1r/V1. In a case where the amplification factor of the amplifier 11b before change is A1, the amplification factor after change is C1 × A1.

In calibration of the scattered light intensity, the circuit adjuster 23 derives a correction coefficient of the amplification factor of the amplifier 12b for adjusting the voltage value of the second signal for the calibration particle to the reference voltage value. The circuit adjuster 23 outputs the derived correction coefficient to the biological particle counter 1 via the interface 21. In this manner, the circuit adjuster 23 adjusts the second circuit 12 of the biological particle counter 1. That is, the correction coefficient is received by the controller 15 of the biological particle counter 1 via the interfaces 14, 21. Further, the amplification factor of the amplifier 12b is set based on the correction coefficient. Specifically, the amplification factor is set to the product of the correction coefficient and a current amplification factor.

For example, in a case where the voltage value (e.g., the pulse height value) of the second signal obtained for the calibration particle is V2 and the reference voltage value of the second signal specified based on the particle size value and fluorescence agent parameter value of the calibration particle is V2r, the correction coefficient C2 is V2r/V2. In a case where the amplification factor of the amplifier 12b before change is A2, the amplification factor after change is C2 × A2.

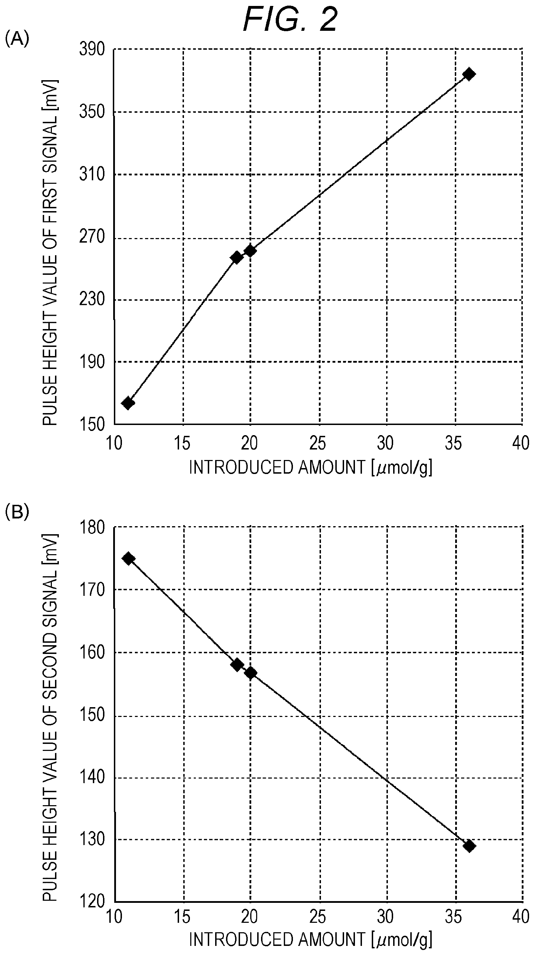

Fig. 2(A) is a graph of an example of a correspondence relation, in the reference data 31 of Fig. 1, between the fluorescence agent parameter value (in this example, the amount of introduced fluorescence agent) of the calibration particle as a polystyrene particle with a particle size of 0.7 µm and the reference voltage value (in this example, the pulse height value of the first signal as the fluorescence intensity) of the first signal corresponding to the fluorescence agent parameter value. As shown in Fig. 2(A), the reference voltage value of the first signal monotonically increases with respect to the fluorescence agent parameter value. In calibration using the first signal, the reference voltage value V1r of the first signal corresponds to the fluorescence intensity of the used calibration particle. Thus, the reference voltage value V1r of the first signal can be uniquely specified based on the fluorescence agent parameter value.

Moreover, Fig. 2(B) is a graph of an example of a correspondence relation, in the reference data 31 of Fig. 1, between the fluorescence agent parameter value (in this example, the amount of introduced fluorescence agent) of the calibration particle as the polystyrene particle with a particle size of 0.7 µm and the reference voltage value (in this example, the pulse height value of the second signal as the scatted light intensity) of the second signal corresponding to the fluorescence agent parameter value. As shown in Fig. 2(B), the reference voltage value of the second signal monotonically decreases with respect to the fluorescence agent parameter value. As described above, even when the base material particle is the polystyrene particle, the scattered light intensity might change due to introduction of the fluorescence agent. In calibration using the second signal, the reference voltage value V2r of the second signal corresponds to the scatted light intensity of the used calibration particle. Thus, the reference voltage value V2r of the second signal can be uniquely specified based on the fluorescence agent parameter value.

Further, in this embodiment, the reference data 31 includes, for each of plural particle sizes, individual reference data indicating a correspondence relation between the fluorescence agent parameter value and each of the reference voltage values of the first and second signals corresponding to the fluorescence agent parameter value. The circuit adjuster 23 selects and uses, from the reference data 31, the individual reference data corresponding to the particle size of the calibration particle used for calibration.

The storage device 24 is a non-volatile storage device such as a flash memory. The storage device 24 is configured to store the reference data 31. The reference data 31 is data indicating the particle size of the base material particle and indicating, for each particle size, a correspondence relation between the fluorescence agent parameter value correlated to the content of the fluorescence agent inside the surface of the base material particle and the reference voltage value of the first signal corresponding to the fluorescence agent parameter value. For example, the amount of fluorescence agent introduced into the surface of the base material particle in production of the calibration particle or a parameter (e.g., the concentration of a fluorescence agent solution used for introduction of the fluorescence agent into the surface of the base material particle) influencing the above-described content in the process of producing the calibration particle is used as a fluorescence agent parameter. Moreover, such a correspondence relation is represented by, for example, an approximate formula or a table in the reference data 31. Thus, the circuit adjuster 23 calculates the approximate formula or refers to the table, thereby specifying the above-described reference voltage value.

The input device 25 is, for example, a hardware key or a touch panel configured to detect user operation of the calibration device 2. The display device 26 is, for example, a liquid crystal display or an indicator configured to display various kinds of information for a user.

A controller 27 is configured to control the internal devices (the measurement value obtainer 22, the circuit adjuster 23, the display device 26, and the like) of the calibration device 2 based on, e.g., the user operation input to the input device 25. In this manner, the controller 27 calibrates the biological particle counter 1.

For example, when the particle size value or the fluorescence agent parameter value of the calibration particle to be used is input to the input device 25, the controller 27 causes the measurement value obtainer 22 to obtain the above-described voltage values of the first and second signals. Moreover, the controller 27 provides the circuit adjuster 23 with the input values of the particle size and the fluorescence agent parameter. In this manner, the circuit adjuster 23 adjusts the first and second circuits 11, 12 of the biological particle counter 1.

Note that the above-described reference voltage value is a voltage value accurately measured in advance using the calibration particle under predetermined measurement environment. The reference data 31 is specified in advance by, e.g., such an experiment, and is stored in the storage device 24.

The measurement value obtainer 22 and the circuit adjuster 23 may be implemented as software by a program executed by a computer. Alternatively, the measurement value obtainer 22 and the circuit adjuster 23 may be implemented as hardware by dedicated circuits.

Note that in this embodiment, each of the above-described voltage values (in this embodiment, the pulse height values) of the first and second signals for the calibration particle is the average of the voltage values for plural calibration particles. The biological particle counter 1 calculates such an average value. Alternatively, the measurement value obtainer 22 of the calibration device 2 obtains, for each of the first and second signals, the voltage values for plural calibration particles, and calculates the average value of the obtained voltage values.

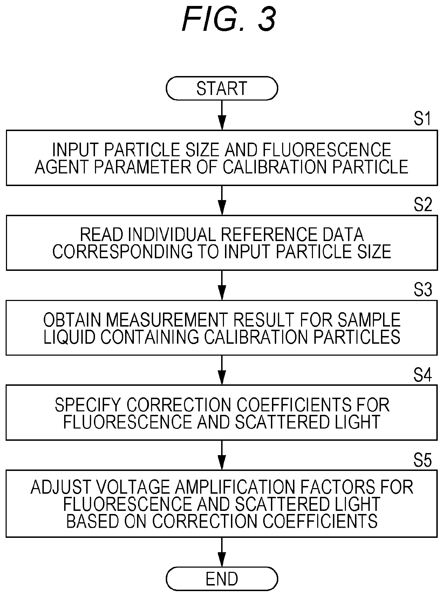

Next, operation of the above-mentioned calibration device 2 will be described. Fig. 3 is a flowchart for describing operation of the calibration device 2 illustrated in Fig. 1.

In the calibration device 2, when predetermined user operation is detected by the input device 25, the controller 27 starts automatic calibration of the biological particle counter 1 connected to the calibration device 2. First, the controller 27 uses the display device 26 to prompt the user to input the particle size value and fluorescence agent parameter value of the calibration particle.

When the user inputs, to the input device 25, the particle size value and fluorescence agent parameter value of the calibration particle to be used for current calibration, the controller 27 detects the input particle size value and the input fluorescence agent parameter value by the input device 25, and outputs these values to the circuit adjuster 23 (a step S1).

The circuit adjuster 23 selects and reads the individual reference data corresponding to the input particle size from the reference data 31 (a step S2). Further, the circuit adjuster 23 specifies, based on the individual reference data, the reference voltage value V1r of the first signal and the reference voltage value V2r of the second signal.

The controller 27 outputs a mode switching instruction to the biological particle counter 1 via the interface 21. In this manner, the controller 27 switches an operation mode of the biological particle counter 1 to a calibration mode. In the calibration mode, the amplification factor of the amplifier 11b of the first circuit 11 and the amplification factor of the amplifier 12b of the second circuit 12 are changeable. Thereafter, the measurement value obtainer 22 obtains, from the biological particle counter 1, the above-described voltage value V1 of the first signal and the above-described voltage value V2 of the second signal (in this embodiment, the pulse height values) for the calibration particle (a step S3). Note that such measurement for the calibration particle may be performed in advance. Alternatively, measurement for the calibration particle may be performed after the operation mode has been switched to the calibration mode.

When the measurement value obtainer 22 obtains the above-described voltage value V1 of the first signal and the above-described voltage value V2 of the second signal for the calibration particle, the circuit adjuster 23 calculates the correction coefficients C1, C2 based on the voltage value V1 of the first signal and the voltage value V2 of the second signal (a step S4).

Then, the circuit adjuster 23 provides the correction coefficients C1, C2 to the controller 15 of the biological particle counter 1 via the interfaces 14, 21. The controller 15 changes the amplification factors of the amplifiers 11b, 12b based on the correction coefficients C1, C2 (a step S5).

After the amplification factors have been changed, the controller 15 of the biological particle counter 1 automatically returns the operation mode from the calibration mode to a measurement mode.

As described above, according to the above-mentioned embodiment, the measurement value obtainer 22 obtains the voltage values of the first and second signals for the calibration particle from the biological particle counter 1, the biological particle counter 1 including the first circuit 11 configured to generate the first signal corresponding to the fluorescence from the biological particle in response to the irradiated light and the second circuit 12 configured to generate the second signal corresponding to the scattered light from the biological particle in response to the irradiated light and the biological particle counter 1 being configured to count the biological particles based on the first signal and the second signal. This calibration particle is the particle obtained in such a manner that the fluorescence agent infiltrates into the surface of the polystyrene particle. The circuit adjuster 23 (a) uses the reference data 31 indicating the correspondence relation between the fluorescence agent parameter value correlated to the content of the fluorescence agent inside the surface of the polystyrene particle and the reference voltage value of the first signal corresponding to the fluorescence agent parameter value, thereby specifying the reference voltage value V1r of the first signal corresponding to the fluorescence agent parameter value for the calibration particle for which the voltage value V1 of the first signal has been obtained by the measurement value obtainer 22; and (b) adjusts the first circuit 11 such that the voltage value V1 of the first signal for the calibration particle reaches the reference voltage value V1r specified based on the reference data 31. Moreover, the circuit adjuster 23 (c) uses the reference data 31 indicating the correspondence relation between the fluorescence agent parameter value correlated to the content of the fluorescence agent inside the surface of the polystyrene particle and the reference voltage value of the second signal corresponding to the fluorescence agent parameter value, thereby specifying the reference voltage value V2r of the second signal corresponding to the fluorescence agent parameter value for the calibration particle for which the voltage value V2 of the second signal has been obtained by the measurement value obtainer 22; and (b) adjusts the second circuit 12 such that the voltage value V2 of the second signal for the calibration particle reaches the reference voltage value V2r specified based on the reference data 31.

In this manner, the first circuit 11 as a fluorescence detection circuit is automatically and accurately calibrated according to the fluorescence parameter value of the calibration particle used for calibration. That is, fluorescence sensitivity of the biological particle counter 1 is adjusted to a reference value, and therefore, variation in the fluorescence sensitivity among the devices of the biological particle counter is reduced. Specifically, the calibration particle is obtained in such a manner that the fluorescence agent infiltrates into the surface of the base material particle. Thus, the correspondence relation between the fluorescence agent parameter value correlated to the content of the fluorescence agent inside the surface of the base material particle and the reference voltage value of the first signal as a fluorescence detection signal can be accurately specified in advance with less variation in the fluorescence characteristics. With such preparation of the correspondence relation as the reference data 31, when the biological particle counter 1 is re-calibrated corresponding to the biological particle targeted for counting due to a change in the biological particle targeted for counting, the fluorescence agent parameter value of the calibration particle corresponding to the changed biological particle targeted for counting is input, and therefore, the biological particle counter can be accurately calibrated according to the biological particle targeted for counting.

Moreover, in the above-mentioned embodiment, the reference data 31 includes the reference voltage value of the second signal in a case where the content of the fluorescence agent inside the surface of the polystyrene particle is zero. The circuit adjuster 23 (c) adjusts the second circuit 12 such that the voltage value V2 of the second signal for the calibration particle reaches the reference voltage value V2r of the second signal in the reference data 31.

In this manner, both of the first circuit 11 as the fluorescence detection circuit and the second circuit 12 as a scattered light detection circuit can be calibrated in parallel by single measurement and calibration. Thus, the time and effort required for calibration are reduced.

### INDUSTRIAL APPLICABILITY

The present invention is applicable to calibration of a biological particle counter, for example.

### DESCRIPTION OF REFERENCE SIGNS

- 1: Biological particle counter
- 2: Calibration device
- 11: First circuit
- 12: Second circuit
- 22: Measurement value obtainer
- 23: Circuit adjuster
- 31: Reference data

## Claims

1. A method for calibrating a biological particle counter, comprising:
a first measurement step of generating a first signal for a calibration particle by the biological particle counter including a first circuit and configured to count a biological particle based on the first signal, the first circuit being configured to generate the first signal corresponding to fluorescence from the biological particle in response to irradiated light;
a first adjustment step of adjusting the first circuit such that a voltage value of the first signal for the calibration particle reaches a reference voltage value;
a second measurement step of generating a second signal for the calibration particle by the biological particle counter further including a second circuit and configured to count the biological particle based on the first signal and the second signal, the second circuit being configured to generate the second signal corresponding to scattered light from the biological particle in response to the irradiated light; and
a second adjustment step of adjusting the second circuit such that a voltage value of the second signal for the calibration particle reaches a reference voltage value,
wherein
the calibration particle is a particle obtained in such a manner that a fluorescence agent infiltrates into a surface of a polystyrene particle, and
at the first adjustment step,
(a) reference data indicating a correspondence relation between a fluorescence agent parameter value correlated to a content of the fluorescence agent inside the surface of the polystyrene particle and the reference voltage value of the first signal corresponding to the fluorescence agent parameter value is used to specify the reference voltage value of the first signal corresponding to the fluorescence agent parameter value for the calibration particle used at the measurement step,
(b) the first circuit is adjusted such that the voltage value of the first signal for the calibration particle reaches the reference voltage value specified based on the reference data,
at the second adjustment step,
(c) reference data indicating a correspondence relation between the fluorescence agent parameter value and the reference voltage value of the second signal corresponding to the fluorescence agent parameter value is used to specify the reference voltage value of the second signal corresponding to the fluorescence agent parameter value for the calibration particle used at the measurement step, and
(d) the second circuit is adjusted such that the voltage value of the second signal for the calibration particle reaches the reference voltage value of the second signal in the reference data,
wherein the biological particle counter counts the biological particles or the calibration particles in sample liquid.

2. The method for calibrating the biological particle counter according to claim 1, wherein
the reference data corresponding to a particle size of the calibration particle is selected and used from the reference data corresponding to plural particle sizes.

3. The method for calibrating the biological particle counter according to claim 1 or 2, wherein
at least after the first adjustment step, the biological particle counter counts the calibration particle in liquid with concentration of a predetermined number containing a predetermined number of calibration particles or the calibration particle and the polystyrene particle in liquid with concentration of a predetermined number containing a predetermined number of calibration particles and a predetermined number of polystyrene particles, and a counting efficiency of the biological particle counter is specified based on a counting result.

4. A calibration device of a biological particle counter, comprising:
a measurement value obtainer configured to obtain a voltage value of a first signal and a second signal for a calibration particle from the biological particle counter including a first circuit and a second circuit, configured to count a biological particle based on the first signal and the second signal, the first circuit being configured to generate the first signal corresponding to fluorescence from the biological particle in response to irradiated light and the second circuit being configured to generate the second signal corresponding to the scattered light from the biological particle in response to the irradiated light; and
a circuit adjuster configured to adjust the first circuit and the second circuit such that the voltage value of the first signal and the second signal obtained for the calibration particle reaches a reference voltage value, wherein
the calibration particle is a particle obtained in such a manner that a fluorescence agent infiltrates into a surface of a polystyrene particle, and
the circuit adjuster
(a) uses reference data indicating a correspondence relation between a fluorescence agent parameter value correlated to a content of the fluorescence agent inside the surface of the polystyrene particle and the reference voltage value of the first signal corresponding to the fluorescence agent parameter value, thereby specifying the reference voltage value of the first signal corresponding to the fluorescence agent parameter value for the calibration particle for which the voltage value of the first signal has been obtained by the measurement value obtainer,
(b) adjusts the first circuit such that the voltage value of the first signal for the calibration particle reaches the reference voltage value specified based on the reference data,
(c) uses reference data indicating a correspondence relation between a fluorescence agent parameter value correlated to the content of the fluorescence agent inside the surface of the polystyrene particle and the reference voltage value of the second signal corresponding to the fluorescence agent parameter value, thereby specifying the reference voltage value of the second signal corresponding to the fluorescence agent parameter value for the calibration particle for which the voltage value of the second signal has been obtained by the measurement value obtainer; and
(d) adjusts the second circuit such that the voltage value of the second signal for the calibration particle reaches the reference voltage value specified based on the reference data,
wherein the biological particle counter counts the biological particles or the calibration particles in sample liquid.

## Patentansprüche

1. Verfahren zur Kalibrierung eines biologischen Partikelzählers, umfassend:
einen ersten Messschritt zum Erzeugen eines ersten Signals für ein Kalibrierpartikel durch den biologischen Partikelzähler, der eine erste Schaltung aufweist und zum Zählen eines biologischen Partikels basierend auf dem ersten Signal konfiguriert ist, wobei die erste Schaltung zum Erzeugen des ersten Signals konfiguriert ist, das Fluoreszenz vom biologischen Partikel in Reaktion auf Bestrahlungslicht entspricht;
einen ersten Anpassungsschritt zum Anpassen der ersten Schaltung derart, dass ein Spannungswert des ersten Signals für das Kalibrierpartikel einen Referenzspannungswert erreicht;
einen zweiten Messschritt zum Erzeugen eines zweiten Signals für das Kalibrierpartikel durch den biologischen Partikelzähler, der ferner eine zweite Schaltung aufweist und zum Zählen des biologischen Partikels basierend auf dem ersten Signal und dem zweiten Signal konfiguriert ist, wobei die zweite Schaltung zum Erzeugen des zweiten Signals konfiguriert ist, das Streulicht vom biologischen Partikel in Reaktion auf Bestrahlungslicht entspricht; und
einen zweiten Anpassungsschritt zum Anpassen der zweiten Schaltung derart, dass ein Spannungswert des zweiten Signals für das Kalibrierpartikel einen Referenzspannungswert erreicht,
wobei
das Kalibrierpartikel ein Partikel ist, das auf solche Weise erhalten wird, dass ein Fluoreszenzmittel in eine Oberfläche eines Polystyrolpartikels eindringt, und
im ersten Anpassungsschritt
(a) Referenzdaten, die eine Entsprechungsbeziehung zwischen einem Fluoreszenzmittelparameterwert, der mit einem Gehalt des Fluoreszenzmittels innerhalb der Oberfläche des Polystyrolpartikels korreliert ist, und dem Referenzspannungswert des ersten Signals anzeigen, der dem Fluoreszenzmittelparameterwert entspricht, zum Spezifizieren des Referenzspannungswerts des ersten Signals verwendet werden, der dem Fluoreszenzmittelparameterwert für das im Messschritt verwendete Kalibrierpartikel entspricht,
(b) die erste Schaltung derart angepasst wird, dass der Spannungswert des ersten Signals für das Kalibrierpartikel den basierend auf den Referenzdaten spezifizierten Referenzspannungswert erreicht,
im zweiten Anpassungsschritt
(c) Referenzdaten, die eine Entsprechungsbeziehung zwischen dem Fluoreszenzmittelparameterwert und dem Referenzspannungswert des zweiten Signals anzeigen, der dem Fluoreszenzmittelparameterwert entspricht, zum Spezifizieren des Referenzspannungswerts des zweiten Signals verwendet werden, der dem Fluoreszenzmittelparameterwert für das im Messschritt verwendete Kalibrierpartikel entspricht, und
(d) die zweite Schaltung derart angepasst wird, dass der Spannungswert des zweiten Signals für das Kalibrierpartikel den Referenzspannungswert des zweiten Signals in den Referenzdaten erreicht,
wobei der biologische Partikelzähler die biologischen Partikel oder die Kalibrierpartikel in Probenflüssigkeit zählt.

2. Verfahren zur Kalibrierung des biologischen Partikelzählers nach Anspruch 1, wobei
die einer Partikelgröße des Kalibrierpartikels entsprechenden Referenzdaten aus den mehreren Partikelgrößen entsprechenden Referenzdaten ausgewählt und verwendet werden.

3. Verfahren zur Kalibrierung des biologischen Partikelzählers nach Anspruch 1 oder 2, wobei
der biologische Partikelzähler zumindest nach dem ersten Anpassungsschritt das Kalibrierpartikel in Flüssigkeit mit einer Konzentration einer vorgegebenen Anzahl, die eine vorgegebene Anzahl von Kalibrierpartikeln enthält, oder das Kalibrierpartikel und das Polystyrolpartikel in Flüssigkeit mit einer Konzentration einer vorgegebenen Anzahl zählt, die eine vorgegebene Anzahl von Kalibrierpartikeln und eine vorgegebene Anzahl von Polystyrolpartikeln enthält, und ein Zählwirkungsgrad des biologischen Partikelzählers basierend auf einem Zählergebnis spezifiziert wird.

4. Kalibriervorrichtung eines biologischen Partikelzählers, umfassend:
eine Messwerterfassungseinrichtung, die zum Erfassen eines Spannungswerts eines ersten Signals und eines zweiten Signals für ein Kalibrierpartikel vom biologischen Partikelzählers konfiguriert ist, der eine erste Schaltung und eine zweite Schaltung aufweist, die zum Zählen eines biologischen Partikels basierend auf dem ersten Signal und dem zweiten Signal konfiguriert sind, wobei die erste Schaltung zum Erzeugen des ersten Signals konfiguriert, das Fluoreszenz vom biologischen Partikel in Reaktion auf Bestrahlungslicht entspricht, und die zweite Schaltung zum Erzeugen des zweiten Signals konfiguriert ist, das Streulicht vom biologischen Partikel in Reaktion auf das Bestrahlungslicht entspricht; und
eine Schaltungsanpassungseinrichtung, die dazu konfiguriert ist, die erste Schaltung und die zweite Schaltung derart anzupassen, dass der für das Kalibrierpartikel erfasste Spannungswert des ersten Signals und des zweiten Signals einen Referenzspannungswert erreicht, wobei
das Kalibrierpartikel ein Partikel ist, das auf solche Weise erhalten wird, dass ein Fluoreszenzmittel in eine Oberfläche eines Polystyrolpartikels eindringt, und
die Schaltungsanpassungseinrichtung
(a) Referenzdaten verwendet, die eine Entsprechungsbeziehung zwischen einem Fluoreszenzmittelparameterwert, der mit einem Gehalt des Fluoreszenzmittels innerhalb der Oberfläche des Polystyrolpartikels korreliert ist, und dem Referenzspannungswert des ersten Signals anzeigen, der dem Fluoreszenzmittelparameterwert entspricht, um dadurch den Referenzspannungswert des ersten Signals zu spezifizieren, der dem Fluoreszenzmittelparameterwert für das Kalibrierpartikel entspricht, für das der Spannungswert des ersten Signals durch die Messwerterfassungseinrichtung erfasst wurde,
(b) die erste Schaltung derart anpasst, dass der Spannungswert des ersten Signals für das Kalibrierpartikel den basierend auf den Referenzdaten spezifizierten Referenzspannungswert erreicht,
(c) Referenzdaten verwendet, die eine Entsprechungsbeziehung zwischen einem Fluoreszenzmittelparameterwert, der mit dem Gehalt des Fluoreszenzmittels innerhalb der Oberfläche des Polystyrolpartikels korreliert ist, und dem Referenzspannungswert des zweiten Signals anzeigen, der dem Fluoreszenzmittelparameterwert entspricht, um dadurch den Referenzspannungswert des zweiten Signals zu spezifizieren, der dem Fluoreszenzmittelparameterwert für das Kalibrierpartikel entspricht, für das der Spannungswert des zweiten Signals durch die Messwerterfassungseinrichtung erfasst wurde; und
(d) die zweite Schaltung derart anpasst, dass der Spannungswert des zweiten Signals für das Kalibrierpartikel den basierend auf den Referenzdaten spezifizierten Referenzspannungswert erreicht,
wobei der biologische Partikelzähler die biologischen Partikel oder die Kalibrierpartikel in Probenflüssigkeit zählt.

## Revendications

1. Procédé d'étalonnage d'un compteur de particules biologiques, comprenant :
une première étape de mesure, consistant à générer un premier signal pour une particule d'étalonnage par le compteur de particules biologiques comportant un premier circuit et conçu pour compter une particule biologique selon le premier signal, le premier circuit étant conçu pour générer le premier signal correspondant à la fluorescence provenant de la particule biologique en réponse à une lumière irradiée ;
une première étape de réglage, consistant à régler le premier circuit pour qu'une valeur de tension du premier signal pour la particule d'étalonnage atteigne une valeur de tension de référence ;
une seconde étape de mesure, consistant à générer un second signal pour la particule d'étalonnage par le compteur de particules biologiques comportant en outre un second circuit et conçu pour compter la particule biologique selon le premier signal et le second signal, le second circuit étant conçu pour générer le second signal correspondant à une lumière diffusée par la particule biologique en réponse à la lumière irradiée ; et
une seconde étape de réglage, consistant à régler le second circuit pour qu'une valeur de tension du second signal pour la particule d'étalonnage atteigne une valeur de tension de référence,
la particule d'étalonnage étant une particule obtenue de manière à ce qu'un agent de fluorescence s'infiltre dans une surface d'une particule de polystyrène, et
à la première étape de réglage,
(a) des données de référence, indiquant une relation de correspondance entre une valeur de paramètre d'agent de fluorescence corrélée à une teneur de l'agent de fluorescence à l'intérieur de la surface de la particule de polystyrène et la valeur de tension de référence du premier signal correspondant à la valeur de paramètre d'agent de fluorescence servant à spécifier la valeur de tension de référence du premier signal correspondant à la valeur de paramètre d'agent de fluorescence pour la particule d'étalonnage utilisée à l'étape de mesure,
(b) le premier circuit étant réglé pour que la valeur de tension du premier signal pour la particule d'étalonnage atteigne la valeur de tension de référence spécifiée selon les données de référence,
lors de la seconde étape de réglage,
(c) des données de référence, indiquant une relation de correspondance entre la valeur de paramètre d'agent de fluorescence et la valeur de tension de référence du second signal correspondant à la valeur de paramètre d'agent de fluorescence, servant à spécifier la valeur de tension de référence du second signal correspondant à la valeur de paramètre d'agent de fluorescence pour la particule d'étalonnage utilisée à l'étape de mesure, et
(d) le second circuit étant réglé pour que la valeur de tension du second signal pour la particule d'étalonnage atteigne la valeur de tension de référence du second signal parmi les données de référence,
le compteur de particules biologiques comptant les particules biologiques ou les particules d'étalonnage dans le liquide échantillon.

2. Procédé d'étalonnage du compteur de particules biologiques selon la revendication 1, dans lequel
les données de référence correspondant à une taille de particule de la particule d'étalonnage sont sélectionnées et utilisées à partir des données de référence correspondant à plusieurs tailles de particule.

3. Procédé d'étalonnage du compteur de particules biologiques selon la revendication 1 ou 2, dans lequel
après la première étape de réglage au moins, le compteur de particules biologiques compte la particule d'étalonnage dans un liquide à concentration de nombre prédéterminé contenant un nombre prédéterminé de particules d'étalonnage ou la particule d'étalonnage et la particule de polystyrène dans un liquide à concentration de nombre prédéterminé contenant un nombre prédéterminé de particules d'étalonnage, ainsi qu'un nombre prédéterminé de particules de polystyrène, et une efficacité de comptage du compteur de particules biologiques est spécifiée selon un résultat de comptage.

4. Dispositif d'étalonnage d'un compteur de particules biologiques, comprenant :
un dispositif d'obtention de valeurs de mesure, conçu pour obtenir une valeur de tension d'un premier signal et d'un second signal pour une particule d'étalonnage à partir du compteur de particules biologiques comportant un premier circuit et un second circuit, conçu pour compter une particule biologique selon le premier signal et le second signal, le premier circuit étant conçu pour générer le premier signal correspondant à la fluorescence de la particule biologique en réponse à une lumière irradiée et le second circuit étant conçu pour générer le second signal correspondant à la lumière diffusée de la particule biologique en réponse à la lumière irradiée ; et
un dispositif de réglage de circuit, conçu pour régler le premier circuit et le second circuit pour que la valeur de tension du premier signal et du second signal, obtenus pour la particule d'étalonnage, atteigne une valeur de tension de référence,
la particule d'étalonnage étant une particule obtenue de manière à ce qu'un agent de fluorescence s'infiltre dans une surface d'une particule de polystyrène, et
le dispositif de réglage de circuit
(a) utilisant des données de référence indiquant une relation de correspondance entre une valeur de paramètre d'agent de fluorescence corrélée à une teneur de l'agent de fluorescence à l'intérieur de la surface de la particule de polystyrène et la valeur de tension de référence du premier signal correspondant à la valeur de paramètre d'agent de fluorescence, ce qui permet de spécifier la valeur de tension de référence du premier signal correspondant à la valeur de paramètre d'agent de fluorescence pour la particule d'étalonnage pour laquelle la valeur de tension du premier signal a été obtenue par le dispositif d'obtention de valeurs de mesure,
(b) réglant le premier circuit pour que la valeur de tension du premier signal pour la particule d'étalonnage atteigne la valeur de tension de référence spécifiée selon les données de référence,
(c) utilisant des données de référence indiquant une relation de correspondance entre une valeur de paramètre d'agent de fluorescence corrélée à la teneur de l'agent de fluorescence à l'intérieur de la surface de la particule de polystyrène et la valeur de tension de référence du second signal correspondant à la valeur de paramètre d'agent de fluorescence, ce qui permet de spécifier la valeur de tension de référence du second signal correspondant à la valeur de paramètre d'agent de fluorescence pour la particule d'étalonnage pour laquelle la valeur de tension du second signal a été obtenue par le dispositif d'obtention de valeurs de mesure ; et
(d) réglant le second circuit pour que la valeur de tension du second signal pour la particule d'étalonnage atteigne la valeur de tension de référence spécifiée selon les données de référence,
le compteur de particules biologiques comptant les particules biologiques ou les particules d'étalonnage dans le liquide échantillon.
